# EUROPEAN PATENT APPLICATION

(11) **EP 0 997 998 A1**
(43) Date of publication of application: **03.05.2000**
(21) Application number: 99500195.5
(22) Date of filing: 25.10.1999
(51) Int. Cl.: H02B 1/20

(54) **Connection base for electromagnetic relay**

(30) Priority: 27.10.1998 ES 9802702
(71) Applicant: Releco, S.A., 28923 Alcorcon, Madrid (ES)
(72) Inventor: Santiago Lozano Rico, 28923 Alcorcon, Madrid (ES)
(74) Representative: Perez Bonal, Bernardo

(57) **Abstract**

Connection base for electromagnetic relay integrated in a special standard profile and which allows to plug and unplug the relay from the base without having to alter the electrical wiring of the connection, provided with female connections (4) and (5) for housing independent bridges (11); connection (3) is used for controlling auxiliary functions, connection (6) for connection to external modules, and additionally the base is provided with a support part (7) for the relay, which also serves as a visual indicator and in which wires are inserted in terminals (10).

## Description

### OBJECT OF THE INVENTION

The invention relates to a connection base for electromagnetic relays or similar devices from among those which are integrated on a special standard profile and allow the relay or device to be plugged or unplugged from the base without having to alter the electrical wiring for junction to other circuit components.

Among other improvements it is characterised by four bridges, two towards the base on the right and a further two towards the base placed on the left, allowing to short its trigger circuit as well as its control circuit.

### BACKGROUND OF THE INVENTION

Bases for connecting electromechanical trigger and control elements to each other and to other elements from which they receive the trigger current or to which they send their orders are widely known.

These bases are manufactured to be placed on profiles which comply with the standards of the main international standards organisms.

Likewise, the devices to be connected tend to be standardised themselves as regards the arrangement of their connection pins, which simplifies replacing and maintaining them quickly and without having to unwire or de-energize the circuits. An example of this type of base may be found in Patent DE 39 23 17 C1.

One requirement in this type of components is the frequent need to have electrical bridges between the various bases which make up the circuit so that the same voltage or current powers the devices in the circuit.

The simplest solution is to create these bridges with wires connected to the various terminals to be shorted, but this solution creates a problem with false contacts, as wire holding terminals work better with a single wire in them and not with two or more, which can sometimes have different diameters.

Solutions have also been attempted which consist of integrating the bridges in the interconnection elements, thus, US Patent 4.171.861 considers connection terminal strips which can be placed on standard profiles, which may be joined by bridges to adjacent ones.

These bridges can even be made in the bases themselves, as proposed in European Patent EP 0 596 257 A2 (DE 42 33 722 A1), in which the interconnection of electromechanical device bases by means of bridges is so that one base may be interconnected by bridges to the base on its right and by another bridge to the base on its left.

However, the base here proposed allows to place as many as four bridges, two to the base on the right and another two to the base on the left, allowing to short not only its control circuit (relay coil contacts) but also its trigger circuit (common contact of the circuit), as well as providing other advantages which will be described.

### DESCRIPTION OF THE INVENTION

The invention object of the present memory relates to a connection base for electromagnetic relays or similar devices, from among those which are integrated on a standard profile and allow the relay or device to be plugged or unplugged from the base without having to alter the electrical wiring which joins it to other circuit components, by means of special connectors for introducing electrical bridges which join certain connections of a base with the corresponding ones of adjacent bases.

It is also provided with a third contact which can be used in the coil circuit and a female termination for connecting special devices, such as light-emitting diodes.

### DESCRIPTION OF THE DRAWINGS

As a complement of the description in progress and in order to aid a better comprehension of the characteristics of the invention, according to an example of a preferred embodiment of the same, as an integral part of the description, a set of drawings is attached in which for purposes of illustration and in a non-limiting nature the following is shown:

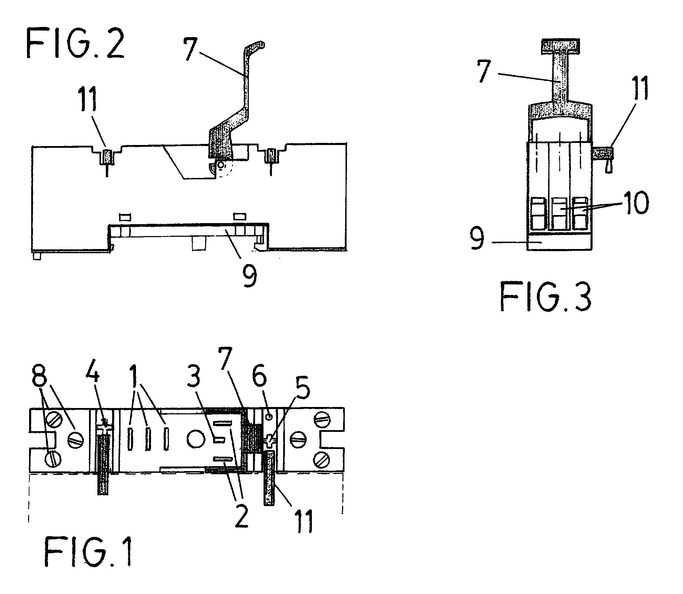

Figure 1 shows a top view of base on the side with the penetrations, on which side the relay is placed.

Figure 2 shows a side view of the proposed base, with the protective cover and the union to the standard profile on the bottom.

Figure 3 is a front view of the base, where one can see the admission orifices for the wiring.

### PREFFERED EMBODIMENT OF THE INVENTION

In view of the above, the present invention relates to a connection base for electromagnetic relays or other similar devices, from among those which are integrated on a standard profile and allow the relay or device to be plugged or unplugged from the base without having to alter the electrical wiring which joins it to other circuit components.

The proposed base consists of several parts, of which particularly visible is a rear cover (9) which closes the set and is also used for anchoring to the standard profile.

Lever (7) is used for support, particularly for anchoring the relay and to visibly indicate its presence or absence. The main part includes all functional elements for connection between the wiring and the relay, as well as the interconnection means between a base and its adjacent bases by bridges (11). There can be as many as four such bridges.

The base integrates the electrical circuits, which consist of metal plates which connect terminals (10) where the wires are introduced and held by screws (8), to penetrations (1) and (2) where the relay pins are introduced and penetrations (4) and (5) where bridges (11) are introduced.

Penetrations (1) correspond to relay actuator terminals, i.e. those known as common, NO and NC terminals. Those labelled (2) correspond to contacts of the relay coil, trigger circuit.

Penetrations for bridges are electrically connected, (4) to the common terminal and (5) to the + terminal. Bridges (11) may be placed between a base and the bases adjacent to it on the left and right, resulting therefore in as many as four bridges (11) per base.

The proposed base is also provided with two additional penetrations for special functions which are common to the micro-relay set. However, the one labelled (3) will be used to connect a third pin of the device's trigger circuit, which does not exist in conventional ones and will be used for controlling auxiliary functions, such as remanence and timing.

The penetration labelled (6) is circular-shaped, unlike (5) with a + shape, and shall be used to connect external control modules to the base. When this terminal (6) is used one of bridges (11) cannot be placed.

This description is not continued in the understanding that any expert in the field has sufficient information to understand the scope of the invention and the advantages derived from it, as well as to be able to reproduce it.

It is understood that, as long as the essence of the invention is not affected, any variation in materials, shape, size and arrangement of the elements are subject to variation within the same characterization.

The terms used in the description and its meaning must be understood as non-limiting.

## Claims

1. Connection base for electromagnetic relays or other similar devices, from among those which are integrated on a standard profile and allow the relay or device to be plugged or unplugged from the base without having to alter the electrical wiring which joins it to other circuit components, essentially characterised in that it is provided with female connectors, penetrations (4) and (5), meant to house up to four independent bridges (11) which can electrically connect a base to the adjacent bases on its left and right, two bridges to each.

2. Connection base for electromagnetic relays as in claim 1, characterised in that it is provided with a sixth female connection (3) for connecting the relay or device which is to be connected on it.

3. Connection base for electromagnetic relays as in claims 1 and 2, characterised in that it is provided with a connection (6) for connecting external control modules to the base.

4. Connection base for electromagnetic relays as in previous claims, characterised in that it is provided with a part (7) for supporting the relay or device to be connected, which is also used to visually indicate whether the device is present or absent, by having a colour different to that of the base itself.

5. Connection base for electromagnetic relays as in previous claims, which in addition to the conventional penetrations for special functions, is characterised in that it is provided with a third penetration (3) for a third pin of the device's trigger circuit for controlling auxiliary functions.
